# EUROPÄISCHE PATENTSCHRIFT

(11) **EP 2 128 000 B1**
(45) Veröffentlichungstag und Bekanntmachung des Hinweises auf die Patenterteilung: **14.12.2011**
(21) Anmeldenummer: 09007255.4
(22) Anmeldetag: 30.05.2009
(51) Int. Cl.: B62D 25/08

(54) **Radkraftfahrzeug und Fahrzeugtragstruktur hierfür**
Wheel motor vehicle and vehicle support structure for same
Véhicule automobile à roues et structure de support de véhicule correspondante

(30) Priorität: 30.05.2008 DE 102008027132
(43) Veröffentlichungstag der Anmeldung: 02.12.2009
(73) Patentinhaber: Tomforde, Johann H., 71069 Sindelfingen (DE)
(72) Erfinder: Tomforde, Johann, Prof.Dipl.-Ing., 71069 Sindelfingen (DE)
(74) Vertreter: Mammel und Maser

(56) Entgegenhaltungen:
- EP-A1- 1 707 482
- DE-A1-102006 002 419
- FR-A- 940 982
- GB-A- 740 000
- US-A- 2 143 666
- US-A- 4 573 707
- US-A- 5 501 289

## Beschreibung

Die Erfindung betrifft eine Fahrzeugtragstruktur für einen Personenkraftwagen oder ein Nutzkraftfahrzeug mit zwei Längsträgern, die im Wesentlichen in Fahrzeuglängsrichtung erstreckt sind, sowie mit wenigstens einem die Längsträger miteinander verbindenden Querträger, sowie einen Personenkraftwagen oder ein Nutzkraftfahrzeug mit einer derartigen Fahrzeugtragstruktur.

Fahrzeugstragstrukturen für Personenkraftwagen sind allgemein bekannt. Aktuelle Personenkraftwagen weisen eine selbsttragende Rohbaustruktur auf. Neben Trägerprofilen umfassen derartige Karosserierohbaustrukturen zahlreiche Blechpressteile. Die Blechpressteile und entsprechende Karosseriesäulen und Karosserieträger werden in aufwendigen Roboter-Schweißanlagen zu der Karosserierohbaustruktur miteinander verbunden. Die Fertigung einer derartigen selbsttragenden Karosserierohbaustruktur ist teuer und lediglich in großen Serien lohnenswert.

Bei Nutzkraftfahrzeugen ist es bekannt, ein tragendes Fahrgestell vorzusehen, auf das im Wesentlichen nichttragende Aufbauten aufgesetzt werden. Das Fahrgestell weist mehrfach gekröpfte Längsträger sowie die Längsträger miteinander verbindende Querträger auf. Derartige Fahrgestelle besitzen ein relativ hohes Gewicht. Energieabsorbierende Deformationsstrukturen, wie sie im Personenkraftwagen-Bereich benötigt werden, sind für derartige Fahrgestelle nicht in gleichem Maße einsetzbar.

Aus der US 2 143 666 A ist eine Fahrzeugtragstruktur für einen Personenkraftwagen mit zwei Längsträgern bekannt, die sich im Wesentlichen in Fahrzeuglängsrichtung erstrecken. Zwischen den beiden Längsträgern ist ein Querträger vorgesehen, der die beiden Längsträger miteinander verbindet. In einem Frontbereich sind die Längsträger in einer gemeinsamen Ebene zu einer Tragstruktur zur Mitte hin spitz zulaufend ausgebildet, so dass von dieser vorderen Seite aus nach hinten verlaufend eine zunehmende Breite bis zu einer maximalen Breite gegeben ist, von der aus Abschnitte des Längsträgers im Heckbereich nach innen gezogen sind, wodurch sich in der Draufsicht ein nach hinten ausgebauchter Längsträgerbereich ergibt, der wesentlich breiter als ein spitz zulaufender vorderer Bereich der Längsträger ausgebildet ist.

Aufgabe der Erfindung ist es, eine Fahrzeugtragstruktur und einen Personenkraftwagen oder ein Nutzkraftfahrzeug der eingangs genannten Art zu schaffen, die einen einfachen Aufbau bei dennoch hoher Crashsicherheit ermöglichen.

Diese Aufgabe wird dadurch gelöst, dass die Längsträger in einem Frontbereich in einer gemeinsamen Ebene zu einer Tragstrukturmitte hin zulaufend gestaltet sind, dass die Krümmung des Längsträgers jedes vorderen Krümmungsbereiches über eine maximale Breite hinaus bei der Erstreckung nach hinten wieder geringfügig nach innen gezogen ist, wodurch sich in der Draufsicht ausgebauchte Längsträgerbereiche ergeben, dass in diesem gegenüber der maximalen Breite nach innen gezogenen Bereich die Längsträger mittels einer entsprechend gegenseitigen Krümmung in einen nach hinten verlaufenden Längsträgerbereich übergehen, und dass der zum rückseitigen Ende der Längsträger verlaufende Bereich schmaler als der ausgebauchte vordere Bereich ist. Die Längsträger sind somit in ihrer vorderen Hälfte - auf eine normale Fahrtrichtung des Fahrzeugs bezogen - mit einer Richtungskomponente zur Fahrzeugmitte nach innen gestaltet. Sie weisen demnach auch eine zusätzliche Richtungskomponente in Fahrzeuglängsrichtung nach vorne auf. Vorzugsweise sind die Längsträger nach innen gekrümmt. Grundsätzlich ist es auch möglich, die Längsträger durch Kröpfung schräg nach innen laufend zu gestalten. Dadurch, dass die Längsträger in ihrer vorderen Hälfte, d.h. im Frontbereich aufeinander zulaufen, wird ein verbessertes Crashverhalten für die Fahrzeugtragstruktur erzielt. Denn bei seitlich versetzten Frontalaufprallbelastungen, wie sie überwiegend im Straßenverkehr auftreten, ermöglicht die winklig zulaufende Gestaltung der Längsträger im Frontbereich, d.h. in deren vorderen Hälfte, ein seitliches Abgleiten, wodurch ein erhöhter Fahrzeuginsassenschutz erzielbar ist. Die Längsträger können an ihren frontseitigen Stirnenden im Bereich der Fahrzeugmitte miteinander verbunden sein, indem sie direkt auf Stoß aneinandergefügt sind. Es ist auch möglich, die nach innen gerichteten Längsträger über ein Zwischenstück indirekt miteinander zu verbinden. Die erfindungsgemäße Lösung ermöglicht eine einfache Bauweise eines Grundchassis mit vielseitigen modularen Aufbauten.

In weiterer Ausgestaltung der Erfindung sind die Längsträger als Hohlkammerprofile zur Aufnahme von Daten- oder Versorgungsleitungen ausgeführt. Hierdurch wird die Funktionalität der Längsträger weiter verbessert. Versorgungsleitungen können insbesondere elektrische Strom- oder Datenversorgungsleitungen, Hydraulik- und Pneumatik- oder Kraftstoffleitungen sein.

In weiterer Ausgestaltung der Erfindung ist frontseitig an den Längsträgern eine Vorbaueinheit insbesondere lösbar angeordnet, die eine Vorderachsaufnahme umfasst. In analoger Weise ist heckseitig eine Heckstruktur insbesondere lösbar an den Längsträgern befestigt, die eine Hinterachsaufnahme umfasst. Sowohl eine Vorbaueinheit als auch eine Heckstruktur können somit modulartig an die durch die Längsträger gebildete Grundtragstruktur angefügt werden. Hierdurch ist es insbesondere möglich, eine einfache Anpassung an unterschiedliche Fahrzeugkonzepte oder Fahrzeugarten zu ermöglichen, in dem jeweils die Vorbau- oder Heckmodule entsprechend angepasst werden können. Hierdurch sind insbesondere unterschiedliche Radstände, unterschiedliche Antriebskonzepte, unterschiedliche Crashstrukturen und ähnliches erzielbar.

In weiterer Ausgestaltung der Erfindung sind die Längsträger durch mehrere Querträger miteinander verbunden, deren Höhe der Höhe der Längsträger entspricht. Dadurch wird eine plattformartige Tragstruktur erzielt. Die Querträger fungieren als Schottwände und definieren unterschiedliche Aufnahmeräume für verschiedene Funktionsbaugruppen.

In weiterer Ausgestaltung der Erfindung sind seitliche Tragsäulenabschnitte in seitlichem Abstand zu den Längsträgern unter Zwischenfügung jeweils einer Deformationseinheit von außen her mit den Längsträgern insbesondere lösbar verbunden. Die Tragsäulenabschnitte können Teil einer B-Säule sein. Die Tragsäulenabschnitte können einstückige Bereiche einer Überrollbügelkonstruktion sein, die mittels eines Dachträgerabschnittes die seitlichen Tragsäulenabschnitte einstückig miteinander verbindet. In vorteilhafter Weise sind die seitlichen Tragsäulenabschnitte in Abstand hinter den ausgebauchten Abschnitten der Längsträger auf Höhe der weiter nach innen gezogenen Längsträgerabschnitte positioniert. Die außenliegende Anordnung der Tragsäulenabschnitte in Verbindung mit der jeweiligen Deformationseinheit ermöglicht einen guten Schutz bei Seitenaufprallbelastungen.

In weiterer Ausgestaltung der Erfindung sind die Längsträger, der wenigstens eine Querträger, und/oder die Trägeranordnungen aus einer Leichmetalllegierung und/oder aus Kohlefaserverbundwerkstoffen und/oder aus Stahl hergestellt. Unter den Trägeranordnungen sind sowohl die in Fahrzeughochrichtung nach oben verlaufenden Tragsäulenabschnitte als auch Dachabschnitte oder andere Trägerteile der Fahrzeugtragstruktur zu verstehen. Die Verwendung von Leichmetall- oder Kohlefaserverbundwerkstoffen ermöglichen ein geringes Gewicht für die Fahrzeugtragstruktur. Bei der Verwendung von Karbonmaterialien ist eine Herstellung entsprechender Trägerprofile in einem Wickelverfahren bereits in entsprechend gekrümmten Zuständen ermöglicht. Bei Leichtmetall- oder Stahlprofilen werden entsprechend gekrümmte Gestaltungen durch Biegung und damit durch Kaltumformen erzielt.

In weiterer Ausgestaltung der Erfindung ist an eine Unterseite der Längsträger eine formstabile Bodenplatte insbesondere lösbar und mittragend angefügt. Diese ragt zumindest teilweise zu gegenüberliegenden Seiten über Außenseiten der Längsträger nach außen ab. Die Bodenplatte ist vorzugsweise geschlossen und einteilig ausgeführt. Sie kann aus Metall- oder Nichtmetallmaterialien hergestellt sein. Die Bodenplatte schließt die Fahrzeugtragstruktur nach unten ab. Die seitlich über die Außenkontur der Längsträger nach außen abragenden Bereiche der Bodenplatte ermöglichen Zusatzfunktionen wie die Abstützung von Tragsäulenabschnitten, eine Funktion als Trittstufen im Bereich seitlicher Karosserieöffnungen und ähnliches.

Für einen Personenkraftwagen oder ein Nutzkraftfahrzeug mit einer wie zuvor ausgeführten Fahrzeugtragstruktur ist es vorteilhaft, wenn die Längsträger der Fahrzeugtragstruktur auf Höhe der Einwirkung von Seitenaufprallbelastungen anderer Fahrzeuge, insbesondere in einem Abstand von 450 mm zu einem befahrbaren Untergrund, angeordnet sind. Dadurch schaffen die Längsträger selbst bereits einen ausreichenden Schutz für Seitenaufprallbelastungen.

In weiterer Ausgestaltung sind zwischen benachbarten Querträgern der Fahrzeugtragstruktur Stauräume für Unterflurbaugruppen wie insbesondere Kraftübertragungs-, Antriebs- oder Energieversorgungsbaugruppen gebildet, die nach unten durch die Bodenplatte oder Segmente davon geschlossen sind. Mit dem erfindungsgemäßen Radkraftfahrzeug sind unterschiedliche Antriebskonzepte realisierbar. Neben einem Elektroantrieb kann auch ein Hybridantrieb, ein Brennstoffzellenantrieb oder ein konventioneller Antrieb mittels eines Verbrennungsmotors erreicht werden.

In vorteilhafter Weise kann die Fahrzeugtragstruktur mit einem oder mehreren Doppelbodenabschnitten versehen sein, um Technik-, Batterie- oder Elektronikinstallationen unterzubringen. Hierzu sind vorzugsweise Teile des Fahrzeugbodens als Doppelboden gestaltet, wobei sich entsprechende Installationsbereiche für Technik, Energieversorgung oder Elektronik zwischen einem Unterboden und dem darüber liegenden, fahrer- und beifahrerseitigen Fußboden bzw. dem darüberlegenden, fondseitigen Fußboden befinden. Die entsprechenden unteren und oberen Bodenabschnitte sind vorzugsweise zueinander parallel beabstandet unter Bildung des Hohlraumes, der die Aufnahme der entsprechenden Installationen ermöglicht.

In weiterer Ausgestaltung der Erfindung sind Frontsitze derart relativ zu den Längsträgern positioniert, dass sie auf Höhe von Längsträgerbereichen angeordnet sind, die Übergangsbereiche zwischen den größer beabstandeten Abschnitten und den geringer beabstandeten Abschnitten der Längsträger bilden. Der Ein- und Ausstieg für auf den Frontsitzen befindliche Personen wird hierdurch vereinfacht, wie oben bereits ausgeführt wurde. Da die Längsträger auf Höhe des Fondbereichs einen geringeren Abstand zueinander aufweisen als im Frontbereich, ergibt sich dieser Ergonomievorteil auch für Ein- und Ausstieg im Bereich der Fondsitze.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt schematisch in perspektivischer Darstellung eine Aus- führungsform eines erfindungsgemäßen Personenkraftwa- gens mit einer Ausführungsform einer erfindungsgemäßen Fahrzeugtragstruktur, und
- Fig. 2 bis 9: verschiedene Montageschritte, um ausgehend von zwei Längsträgern schrittweise zu dem Personenkraftwagen nach Fig. 1 zu gelangen, wobei Fig. 5a ein modifiziertes Ausführungsbeispiel der Erfindung zeigt.

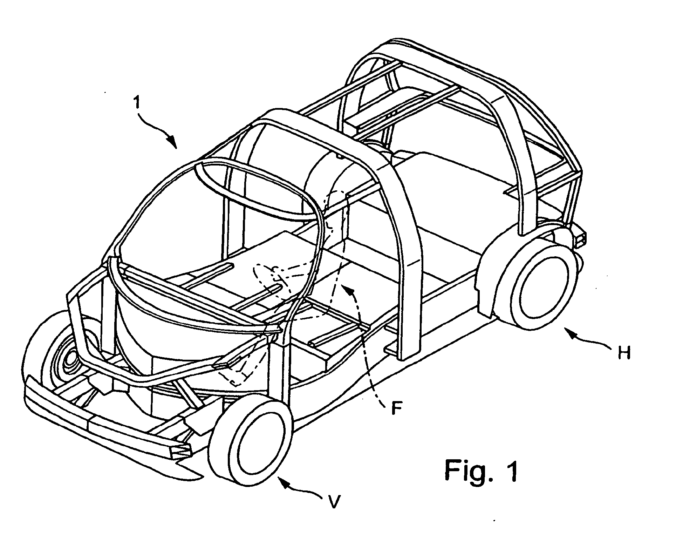

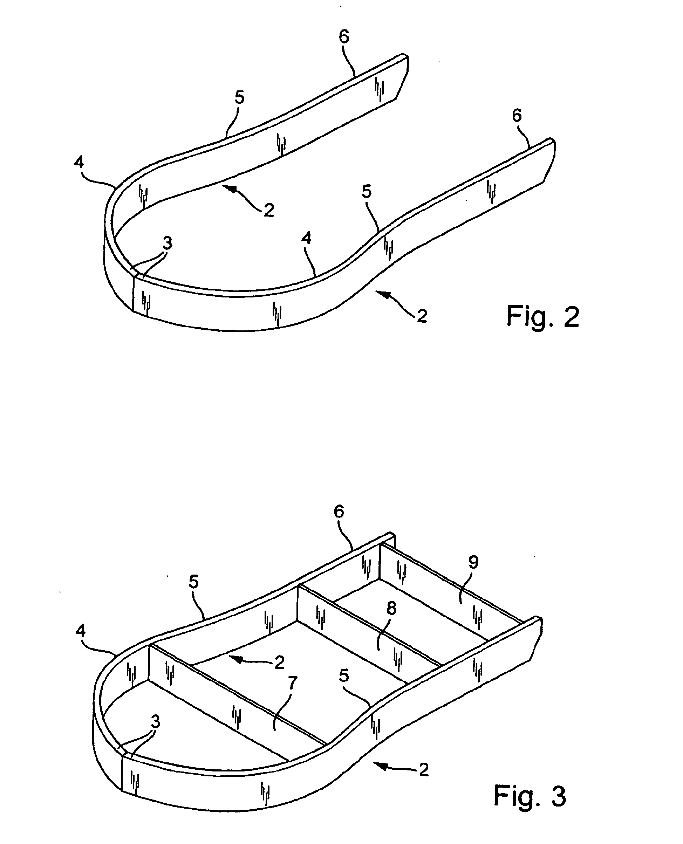

In Fig. 1 ist schematisch ein Personenkraftwagen dargestellt. Das Kraftfahrzeug 1 besitzt eine nachfolgend näher beschriebene Fahrzeugtragstruktur, deren Grundkonstruktion in gleicher Weise für den Aufbau eines Nutzkraftfahrzeugs wie eines Lieferwagens oder ähnlichem eingesetzt werden kann. Das Kraftfahrzeug 1 stellt somit lediglich eine ausgewählte Ausführungsform dar, ohne eine Beschränkung für ein entsprechendes Fahrzeugkonzept zu bilden. Das Kraftfahrzeug 1 ist mit einer schematisch dargestellten Fahrerposition F versehen, die in einer nachfolgend näher beschriebenen Fahrgastzelle vorgesehen ist. Das Kraftfahrzeug 1 weist in einem Vorbaubereich eine Vorderachsanordnung V auf, die durch die schematische Darstellung von Rädern verdeutlicht ist. In einem Heckbereich ist das Kraftfahrzeug 1 zudem mit einer Hinterachsanordnung H versehen, die in entsprechender Weise durch Räder dargestellt ist. Der Aufbau des Kraftfahrzeugs 1 wird nachfolgend anhand der Figuren 2 bis 9 ausführlich beschrieben. Die Darstellung entsprechend aufeinanderfolgender Montageschritte oder Montageabschnitte verdeutlicht den sukzessiven Aufbau des Kraftfahrzeugs 1.

Als Grundträger weist die Fahrzeugtragstruktur des Kraftfahrzeugs 1 nach Fig. 1 zwei Längsträger 2 auf, die anhand der Fig. 2 gut erkennbar sind. Die beiden Längsträger 2 sind relativ zu einer vertikalen Fahrzeugmittellängsebene spiegelsymmetrisch zueinander gestaltet, wie der Fig. 2 entnehmbar ist. Beide Längsträger 2 weisen - in einer Draufsicht gesehen - zwei gegensinnige Krümmungen auf. Ausgehend von jeweils einem vorderen Stirnendbereich 3, die im Bereich der vertikalen Fahrzeugmittellängsebene auf Stoß aneinandergefügt sind, erstrecken sich die Längsträger 2 in einem spitzen Winkel zur Fahrzeugmittellängsachse zu gegenüberliegenden Seiten spiegelsymmetrisch nach außen. Zusätzlich erfahren sie eine kreisbogenartige Krümmung nach hinten, die in einer Draufsicht auch als konvexe Krümmung bezeichnet werden kann.

Eine vordere Hälfte jedes Längsträgers 2 weist somit jeweils einen konvexen Krümmungsabschnitt 4 auf. Die etwa kreisbogenförmige Krümmung jedes vorderen Krümmungsbereiches 4 ist über eine maximale Breite hinaus bei der Erstreckung nach hinten wieder geringfügig nach innen gezogen, wodurch sich in der Draufsicht ausgebauchte Längsträgerbereiche ergeben. Jeder nach innen gezogene Übergangsbereich jedes Längsträgers 2 mündet in einen entsprechend gegensinnigen Krümmungsabschnitt 5, der wiederum nach innen in jeweils einen rückseitigen Linearabschnitt 6 jedes Längsträgers 2 übergeht, die parallel zur vertikalen Fahrzeugmittellängsebene verlaufen. Der Abstand der parallel verlaufenden rückwärtigen Linearabschnitte 6 zueinander ist geringer als der größte Abstand der Längsträger 2 im ausgebauchten, konvexen Krümmungsbereich der vorderen Hälfte der beiden Längsträger 2. Eine in einer Draufsicht an die Außenkontur des jeweiligen konvexen vorderen Krümmungsbereiches 4 der Längsträger 2 angelegte Tangente, die parallel zur Fahrzeugmittellängsachse ausgerichtet ist, erstreckt sich in - auf die Mittellängsachse bezogen - radialem Abstand nach außen parallel zu den rückwärtigen Linearabschnitten 6 der Längsträger 2. Die beiden Längsträger 2 bilden die Grundträger der nachfolgend näher beschriebenen Fahrzeugtragstruktur. Sie erstrecken sich in einer gemeinsamen Ebene, vorzugsweise in einer Horizontalebene. Durch die spiegelsymmetrische Gestaltung sind die gegenüberliegenden Längsträger 2 baugleich, aber gegensinnig gekrümmt. Beide Längsträger 2 weisen die gleiche Breite und die gleiche Höhe auf. Entsprechende Unterkanten und entsprechende Oberkanten der beiden Längsträger 2 befinden sich somit jeweils paarweise auf gleicher Höhe, so dass die Unterkanten der Längsträger 2 in einer gemeinsamen Ebene liegen wie auch die Oberkanten der Längsträger 2, die in einer oberen gemeinsamen Ebene befindlich ist. Beim dargestellten Ausführungsbeispiel sind die beiden Längsträger 2 als Hohlkammerprofile aus Stahl hergestellt. Im Bereich der vorderen Stirnenden 3 sind sie stumpf auf Stoß aneinander gelegt und miteinander verschweißt. Bei nicht dargestellten Ausführungsbeispielen der Erfindung sind die Längsträger 2 als Leichtmetallprofile, insbesondere als Aluminiumprofile, oder aus Kohlefaserverbundwerkstoffen (Karbon) hergestellt. In letzterem Fall wird die Krümmung nicht durch Kalt- oder Warmumformen, insbesondere durch Biegung, hergestellt wie bei Leichtmetall- oder Stahlprofilen, sondern die Herstellung erfolgt direkt in gekrümmter Form in einem entsprechenden Werkzeug, insbesondere durch ein Wickelverfahren. Bei derartigen alternativen Ausführungsformen können die vorderen Stirnenden der Längsträger auch in anderer Art und Weise statt durch Verschweißen form-, kraft- oder stoffschlüssig miteinander verbunden werden. Durch die schräge Zusammenführung der Längsträger 2 im Bereich ihrer vorderen Stirnenden 3 ergibt sich eine Bugspitze nach Art der Spitze eines Bootsbuges.

Die Höhe jedes Längsträgers 2 - in Fahrzeughochrichtung gesehen - entspricht einem mehrzahligen Vielfachen seiner Breite bzw. Dicke (in Fahrzeugquerrichtung gesehen). Beim dargestellten Ausführungsbeispiel ist eine bevorzugte Höhe der Längsträger 2 von etwa 200 bis 300 mm vorgesehen. Die Breite jedes Längsträgers 2 beträgt ca. 50 mm. Beide Längsträger 2 sind als Hohlkammerprofil ausgeführt, wobei diese Profile eine oder mehrere Hohlkammern aufweisen können.

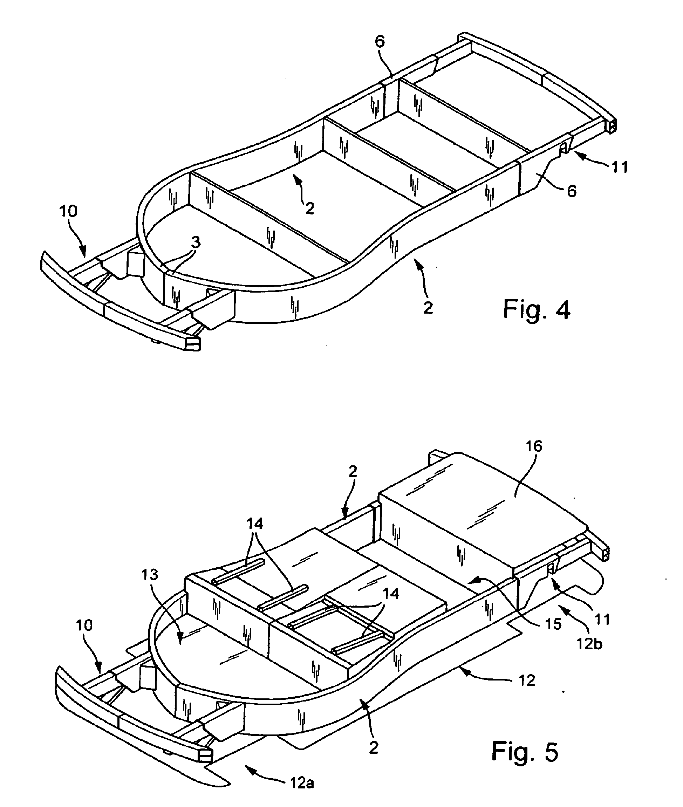

Nach der Verbindung der Längsträger 2 miteinander im Bereich ihrer frontseitigen Stirnenden 3 werden die Längsträger 2 in ihren nach hinten erstreckten Abschnitten durch insgesamt drei Querträger 7, 8, 9 miteinander verbunden. Die Querträger erstrecken sich rechtwinklig zu einer Fahrzeugmittellängsachse und damit in Fahrzeugquerrichtung und weisen vorzugsweise die gleiche Höhe auf wie die Längsträger 2. Die Querträger 7 bis 9 schließen somit sowohl mit ihren Oberkanten als auch mit ihren Unterkanten zu den korrespondierenden Kantenbereichen der Längsträger 2 bündig ab. Die Querträger 7 bis 9 werden durch Verschweißen mit den Innenseiten der Längsträger 2 verbunden. Bei einem nicht dargestellten Ausführungsbeispiel der Erfindung kann statt einer Verschweißung eine mechanische Verbindung, insbesondere eine lösbare Schraubverbindung, zwischen Längsträger 2 und Querträgern 7 bis 9 vorgesehen sein. Je nach Materialwahl sind auch andere Verbindungsmittel vorgesehen. An eine so gebildete Grundstruktur wird gemäß Fig. 4 eine Vorbaustruktur 10 und eine Heckstruktur 11 angefügt. Die Vorbaustruktur 10 ist mit einer integrierten Vorderachsaufnahme versehen, die Heckstruktur 11 besitzt eine Hinterachsaufnahme. Sowohl die Vorbaustruktur 10 als auch die Heckstruktur 11 sind modulartig aufgebaut und umfassen neben jeweils einem Stoßfänger energieabsorbierende Deformationselemente, die bei einem Front- oder einem Heckaufprall entsprechende Aufprallenergie in Materialdeformation umwandeln. Die Vorbaustruktur 10 weist zwei längsverlaufende Trägereinheiten auf, die außenseitig an die Längsträger 2 angefügt sind. Beim dargestellten Ausführungsbeispiel erfolgt die Verbindung der Vorbaustruktur 10 über die Trägerabschnitte durch Verschweißung im Bereich der Außenseite der vorderen Längsträgerabschnitte der Längsträger 2. Alternativ ist es bei einem nicht dargestellten Ausführungsbeispiel der Erfindung vorgesehen, die Vorbaustruktur 10 über lösbare Befestigungselemente mit den Längsträgern 2 zu verbinden.

Die Heckstruktur 11 weist zwei Trägerabschnitte auf, die fluchtend zu den heckseitigen Linearabschnitten 6 der Längsträger 2 ausgerichtet und mit den rückseitigen Stirnendbereichen der Linearabschnitte 6 verbunden sind. Die Verbindung der Heckstruktur 11 kann ebenfalls unlösbar durch Verschweißung oder andere Verbindungsarten erfolgen. Alternativ ist es möglich, auch die Heckstruktur 11 durch lösbare Befestigungsmittel wie insbesondere Schraubverbindungen mit den Längsträgern 2 zu verbinden.

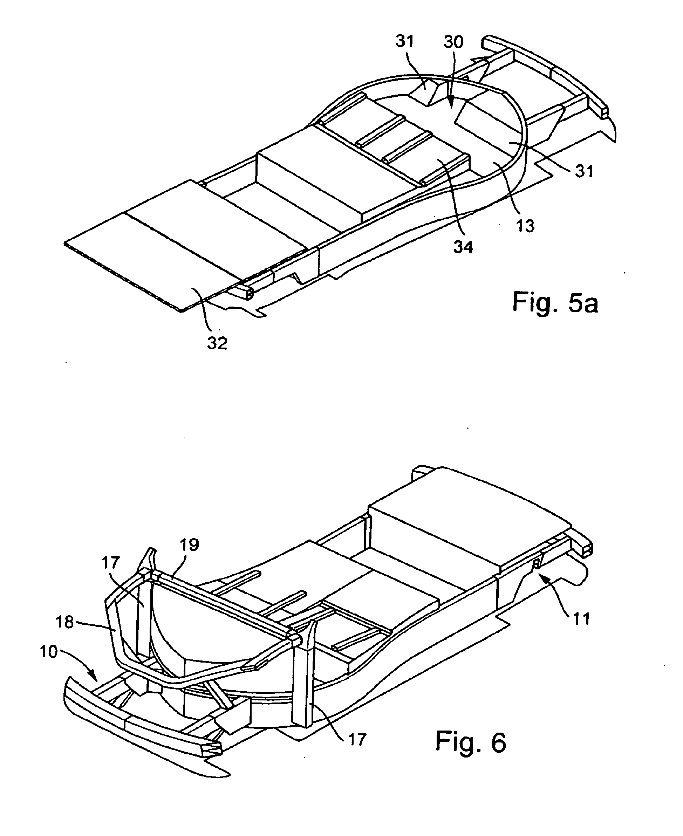

An die Grundträgerstruktur gemäß Fig. 4 wird anschließend von unten her eine etwa rechteckige Bodenplatte 12 angefügt, die sich zumindest über die Länge der Längsträger 2 sowie über die Breite der Grundträgerstruktur als flächiges, geschlossenes und ebenes Bauteil erstreckt. Die Bodenplatte 12 ist mit den Unterkanten der Längsträger 2 und der Querträger 7 bis 9 kraftübertragend verbunden, insbesondere verschweißt oder durch form- oder kraftschlüssige Befestigungsmittel mittragend an die Unterseite der Längsträger 2 angefügt. Es ist auch möglich, die Bodenplatte 12 durch lösbare Befestigungsmittel wie insbesondere durch Schraubverbindungen mit den Längs- und Querträgern 2, 7 bis 9 zu verbinden. Die Bodenplatte 12 erstreckt sich bis in die Bereiche der Vorbaustruktur 10 und der Heckstruktur 11, wobei sie in diesem Front- und Heckbereich mit entsprechenden Radaussparungen versehen ist. Insbesondere im Bereich der Längsträger 2 bildet die Bodenplatte 12 auch den Boden der Grundträgerstruktur. Die Bodenplatte 12 weist auf gegenüberliegenden Seiten zwei parallel zur Mittellängsachse der Grundträgerstruktur und des Fahrzeugs verlaufende Außenränder auf, die in seitlich nach außen versetztem Abstand zu den Längsträgern 2 angeordnet sind. Dadurch ragt die Bodenplatte 12 im Bereich der nach innen gezogenen Linearabschnitte der Längsträger 2 und im Übergangsbereich zwischen den gegensinnigen Krümmungsabschnitten 4, 5 seitlich über die Außenkontur der Längsträgerkonstruktion - in der Draufsicht gesehen - hinaus. Diese beidseitig nach außen abragenden Bereiche der Bodenplatte 12 bilden jeweils eine Trittstufe für einen Fondbereich der Fahrgastzelle des Kraftfahrzeugs 1, wie nachfolgend noch ausgeführt wird. Die Bodenplatte 12 bildet einen Boden für die zwischen den Innenseiten der Längsträger 2 und den verschiedenen Querträgern 7 bis 9 geschaffenen, nach oben offenen Stauräume, die für die Unterbringung entsprechender Funktionsbaugruppen vorgesehen sind. Welche Funktionsbaugruppen und in welcher Form hier untergebracht werden können, wird im Rahmen der vorliegenden Erfindung nicht näher ausgeführt. Die entsprechenden Stau- oder Aufnahmeräume werden durch Beplankungen verschlossen, die Plattformen 14, 16 für Sitzkonstruktionen bilden können. In Fig. 5 sind stellvertretend für eine Frontsitzanordnung entsprechende Sitzführungsschienen dargestellt. Unmittelbar vor dieser Plattform für die Sitzführungsschienen ergibt sich ein frontseitiger Fußraum 13 der Fahrgastzelle. Eine Plattform 16, auf oder vor der eine Fondsitzanordnung montiert werden kann, schließt nach hinten an einen weiteren Aufnahmeraum 15 an, der als Fußraum für den Fahrzeugfond dienen kann.

Wie anhand der Figuren 5 bis 9 erkennbar ist, sind die Sitzführungsschienen 14 für die Frontsitzanordnung auf Höhe der Übergangsbereiche der Längsträger 2 zwischen der konvexen und der konkaven Krümmung jedes Längsträgers 2 positioniert. Falls nun eine Person, die auf einem entsprechenden Frontsitz sitzt, für ein Aussteigen ihre Beine seitlich nach außen durch einen nicht dargestellten Türausstieg schwingt, kommen die Beine bereits in dem nach innen gezogenen Bereich der Längsträger 2 nach außen, wodurch die Außenkontur der Längsträger 2 relativ dicht an eine seitliche Sitzkante herangerückt ist. Das Aussteigen wird demzufolge für eine entsprechende Person erheblich erleichtert.

Die Ausführungsform gemäß Fig. 5a entspricht im Wesentlichen der ausführlich beschriebenen Ausführungsform nach den Figuren 1 bis 5 und 6 bis 9. Die Ausführungsform nach Fig. 5a unterscheidet sich lediglich geringfügig von dem Montageschritt nach Fig. 5. Nachfolgend wird daher lediglich auf die Unterschiede der Ausführung nach Fig. 5a eingegangen. Im Übrigen stimmt die Ausführungsform nach Fig. 5a mit der ausführlich beschriebenen Ausführungsform nach den Figuren 1 bis 5 und 6 bis 9 überein. Bei der Ausführungsform nach Fig. 5a ist der frontseitige Fußraum 13 mit Stützbereichen 31 sowie mit einer Aussparung 30 versehen. Die Aussparung 30 dient zum Einen zur Aufnahme entsprechender Fußpedale. Zum Anderen dient diese dazu, einen zusätzlichen Freiraum zu schaffen, damit ein Fahrer auf dem frontseitigen Fahrersitz seine Beine vollständig nach vorne ausstrecken kann, um Ermüdungserscheinungen während der Fahrt zu reduzieren. Die schräg ansteigenden Stützbereiche 31 dienen zum ergonomisch günstigen Abstellen der Füße in der ungestreckten, d.h. der gebeugten Sitzstellung. Ergänzend weist die Fahrzeugtragstruktur in einem Heckbereich eine plattenförmige Heckverlängerung 32 auf, die eine Verlängerung eines Laderaumes und die Gestaltung entsprechender Laderaumaufbauten ermöglicht.

Wie anhand der Fig. 6 dargestellt ist, erfolgt anschließend der weitere Aufbau der Fahrzeugtragstruktur in Fahrzeughochrichtung nach oben. So werden außenseitig an die vorderen Bereiche der Längsträger 2 Tragsäulen 17 durch lösbare Befestigungsmittel oder durch stoffschlüssige Verbindungen angefügt, die A-Säulen des Kraftfahrzeugs 1 bilden. Diese Tragsäulen 17 werden durch eine Querträgeranordnung 19 miteinander verbunden. Auf Höhe der Querträgeranordnung 19 ist zudem eine Rahmenkonstruktion 18 nach vorne gezogen, die je nach Funktion der Vorbaustruktur 10 einen oberen Rahmen für einen Motorraum oder einen Stauraum bilden kann.

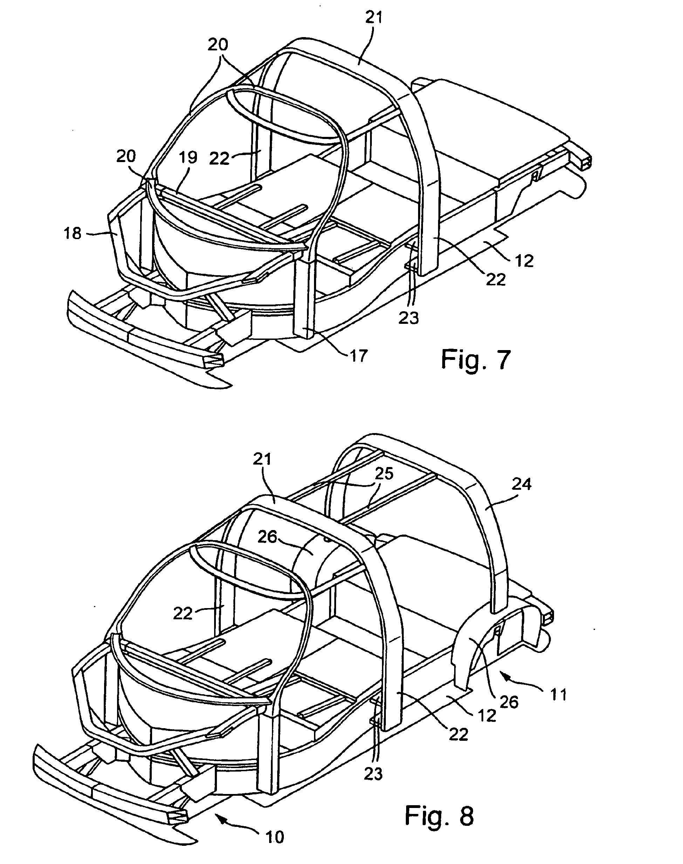

An die als A-Säulen dienenden Tragsäulen 17 ist für den weiteren Verlauf der Montage gemäß Fig. 7 ein Windschutzscheibenrahmen 20 angefügt, der über Dachträgerabschnitte mit einer Mittelträgeranordnung 21, 22 verbunden ist. Die Mittelträgeranordnung 21, 22 ist nach Art eines Überrollbügels gestaltet und weist neben einem Dachträgerabschnitt 21 zwei einstückig in den Dachträgerabschnitt übergehende seitliche Tragsäulen 22 auf, die als B-Säule fungieren. Die Tragsäulenabschnitte 22 ragen vertikal in Fahrzeughochrichtung nach oben und sind in seitlichem Abstand zu den Außenseiten der Längsträger 2 angeordnet, wie Fig. 7 entnehmbar ist. In den so gebildeten Zwischenraum zwischen den Tragsäulenabschnitten 23 und den Außenseiten der Längsträger 2 sind energieabsorbierende Deformationsstrukturen 23 eingefügt, mittels derer die Tragsäulenabschnitte 22 mit den Längsträgern fest verbunden sind. Die Tragsäulenabschnitte 22 sind auf Höhe der nach innen gezogenen Übergangsabschnitte 5 der Längsträger 2 angeordnete, wobei die Tragsäulenabschnitte 22 mit ihren Außenseiten nicht über die größte Breite der Längsträger 2 im Bereich der Krümmungsabschnitte 4 hinausragen. Die Trägerabschnitte 22 sind auf der Bodenplatte 12 abgestützt und kraftübertragend mit der Bodenplatte und/oder den Längsträgern 2 verbunden. Die Deformationstrukturen 23 ermöglichen bei einem Seitenaufprall auf die Tragsäulenabschnitte 22 bereits einen gewissen Abbau von Aufprallenergie, bevor die Außenkontur der Längsträger 2 erreicht wird. Durch die einstückige Gestaltung der Mittelträgeranordnung 21, 22 und die Ausführung als Überrollbügel wird ein sicherer Überrollschutz erzielt.

Für den weiteren Aufbau des Kraftfahrzeugs werden anschließend auf Höhe der Heckstruktur 11 zum Einen Kotflügel 26 vorgesehen, die im Bereich der Radaussparung vorgesehen und mit der Bodenplatte 12 sowie den Längsträgern 2 bzw. der Heckstruktur 11 verbunden werden. Zudem ist als C-Säulenanordnung eine weitere Trägeranordnung 24 vorgesehen, die ebenfalls nach Art eines Überrollbügels seitliche Trägerabschnitte und einen einstückig angeformten Dachabschnitt aufweist. Die Trägeranordnung 24 ist fest mit der Heckstruktur 11 durch geeignete lösbare oder unlösbare Verbindungsmittel verbunden. Die rückseitige Trägeranordnung 24 und die Mittelträgeranordnung 21, 22 werden im Bereich ihrer Dachträgerabschnitte durch längsverlaufende Dachrahmen 25 miteinander verbunden. Auch hier kann die Verbindung lösbar oder unlösbar mittels geeigneter Verbindungsmittel erfolgen.

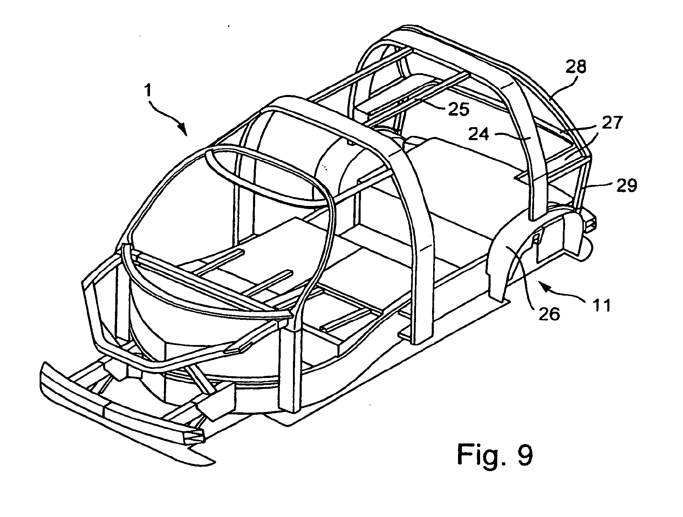

Schließlich wird gemäß Fig. 9 das Fahrzeugheck vervollständigt, indem als D-Säulen dienende Trägerabschnitte 28, 29 in die Heckstruktur formstabil eingebunden werden. Auch eine horizontal angeordnete Heckrahmenkonstruktion 27, die eine Hutablagenfunktion übernehmen kann, wird kraftübertragend mit eingebunden. Alle Trägerteile des Fahrzeughecks können lösbar oder unlösbar, aber kraftübertragend miteinander verbunden werden. Durch die beschriebene Trägerkonstruktion ergibt sich insgesamt eine formstabile Fahrgastzelle für wenigstens vier Sitzplätze, wobei der entsprechend gebildete Fahrzeuginnenraum eine vergleichsweise große Länge von 3 m aufweisen kann, und dies, obwohl die Gesamtlänge des Kraftfahrzeugs 1 vorzugsweise nicht mehr als 4,50 m beträgt.

Wie anhand der Figuren 1 und 9 gut erkennbar ist, bilden die nach außen ragenden Überstände der Bodenplatte 12 außerhalb der Längsträger 2 zwischen der B-Säule und der C-Säule eine Trittstufe, um das Ein- und Aussteigen in den oder aus dem Fondbereich zu erleichtern.

## Patentansprüche

1. Fahrzeugtragstruktur für ein Personenkraftwagen oder Nutzkraftfahrzeuge mit zwei Längsträgern, die im Wesentlichen in Fahrzeuglängsrichtung erstreckt sind, sowie mit wenigstens einem die Längsträger miteinander verbindenden Querträger, die in einem Frontbereich in einer gemeinsamen Ebene zu einer Tragstrukturmitte hin zulaufend sind, **dadurch gekennzeichnet, dass** die Krümmung des Längsträgers (2) jedes vorderen Krümmungsbereiches (4) über eine maximale Breite hinaus bei der Erstreckung nach hinten wieder geringfügig nach innen gezogen ist, wodurch sich in der Draufsicht ausgebauchte Längsträgerbereiche ergeben, dass in diesem gegenüber der maximalen Breite nach innen gezogenen Bereich die Längsträger mittels einer entsprechend gegenseitigen Krümmung (5) in einen nach hinten verlaufenden Längsträgerbereich (6) übergehen, und dass der zum rückseitigen Ende der Längsträger (2) verlaufende Bereich schmaler als der ausgebauchte vordere Bereich ist.

2. Fahrzeugtragstruktur nach Anspruch 1 oder 2, **dadurch gekennzeichnet, dass** die Längsträger (2) an ihren frontseitigen Stirnenden (3) direkt oder indirekt miteinander verbunden sind, wobei vorzugsweise die Längsträger (2) mit ihren frontseitigen Stirnenden (3) auf Stoß aneinandergefügt sind.

3. Fahrzeugtragstruktur nach Anspruch 1, **dadurch gekennzeichnet, dass** die Längsträger (2) über ihre gesamte Länge in einer gemeinsamen Ebene angeordnet sind.

4. Fahrzeugtragstruktur nach Anspruch 1, **dadurch gekennzeichnet, dass** die beiden Längsträger (2) spiegelsymmetrisch zueinander gekrümmt sind.

5. Fahrzeugtragstruktur nach Anspruch 1, **dadurch gekennzeichnet, dass** die Längsträger (2) sich über eine Länge einer Fahrgast- oder Innenraumzelle erstrecken.

6. Fahrzeugtragstruktur nach Anspruch 1, **dadurch gekennzeichnet, dass** jeder Längsträger (2) eine Höhe aufweist, die einem mehrzahligen Vielfachen seiner Breite entspricht, wobei vorzugsweise die Längsträger (2) als Hohlkammerprofile zur Aufnahme von Daten- oder Versorgungsleitungen ausgeführt sind.

7. Fahrzeugtragstruktur nach wenigstens einem der vorhergehenden Ansprüche, **dadurch gekennzeichnet, dass** frontseitig an den Längsträgern (2) eine Vorbaueinheit (10) insbesondere lösbar angeordnet ist, die eine Vorderachsaufnahme umfasst.

8. Fahrzeugtragstruktur nach wenigstens einem der vorhergehenden Ansprüche, **dadurch gekennzeichnet, dass** heckseitig eine Heckstruktur (11) insbesondere lösbar an den Längsträgern (2) befestigt ist, die eine Hinterachsaufnahme umfasst.

9. Fahrzeugtragstruktur nach wenigstens einem der vorhergehenden Ansprüche, **dadurch gekennzeichnet, dass** die Längsträger (2) durch mehrere Querträger (7 bis 9) miteinander verbunden sind, deren Höhe der Höhe der Längsträger (2) entspricht.

10. Fahrzeugtragstruktur nach wenigstens einem der vorhergehenden Ansprüche, **dadurch gekennzeichnet, dass** mehrere, eine Fahrgastzelle definierende Trägeranordnungen lösbar oder unlösbar mit den Längsträgern (2) verbunden sind.

11. Fahrzeugtragstruktur nach wenigstens einem der vorhergehenden Ansprüche, **dadurch gekennzeichnet, dass** seitliche Tragsäulenabschnitte (22) in seitlichem Abstand zu den Längsträgern (2) unter Zwischenfügung jeweils einer Deformationseinheit (23) von außen her mit den Längsträgern (2) insbesondere lösbar verbunden sind.

12. Fahrzeugtragstruktur nach wenigstens einem der vorhergehenden Ansprüche, **dadurch gekennzeichnet, dass** die Längsträger (2), der wenigstens eine Querträger (7 bis 9) und/oder die Trägeranordnungen (17 bis 29) aus einer Leichtmetalllegierung und/oder aus Kohlefaserverbundwerkstoffen und/oder aus Stahl hergestellt sind.

13. Fahrzeugtragstruktur nach wenigstens einem der vorhergehenden Ansprüche, **dadurch gekennzeichnet, dass** an eine Unterseite der Längsträger (2) eine formstabile Bodenplatte (12) insbesondere lösbar und mittragend angefügt ist, wobei vorzugsweise die Bodenplatte (12) unter Bildung von Trittstufen in den Abschnitten geringerer Breite der Längsträger (2) über diese seitlich nach außen abragt.

14. Radkraftfahrzeug mit einer Fahrzeugtragstruktur nach wenigstens einem der vorhergehenden Ansprüche, **dadurch gekennzeichnet, dass** die Längsträger (2) auf Höhe der Einwirkung von Seitenaufprallbelastungen anderer Fahrzeuge, insbesondere in einer Höhe von 450 mm über einem befahrenen Untergrund, angeordnet sind.

15. Radkraftfahrzeug nach dem Oberbegriff des Anspruchs 14 oder nach Anspruch 14, **dadurch gekennzeichnet, dass** zwischen benachbarten Querträgern (7 bis 9) Stauräume für Unterflurbaugruppen wie insbesondere Kraftübertragungs-, Antriebs- oder Energieversorgungsbaugruppen gebildet sind, die nach unten durch die Bodenplatte (12) geschlossen sind.

16. Radkraftfahrzeug nach dem Oberbegriff des Anspruchs 14 oder nach Anspruch 14 oder 15, **dadurch gekennzeichnet, dass** Frontsitze derart relativ zu den Längsträgern (2) positioniert sind, dass sie auf Höhe von Längsträgerbereichen (5) angeordnet sind, die Übergangsbereiche zwischen den größer beabstandeten Abschnitten und den geringer beabstandeten Abschnitten der Längsträger (2) bilden.

## Claims

1. A vehicle support structure for a passenger car or for utility vehicles having two longitudinal members extending essentially in the longitudinal direction of the vehicle and at least one cross member interconnecting said longitudinal members which, in a front section, converge in a common plain towards a centre of the support structure, **characterised in that** beyond a point of maximum width, the curvature of the longitudinal member (2) of each curved front section (4) is drawn slightly inwardly again as it extends farther towards the rear so that, when seen in top view, bulged longitudinal member sections are obtained; **in that** in this section, which is drawn inwardly with respect to the maximum width, the longitudinal members, by way of a corresponding, opposing curvature (5), merge into a rearwardly extending longitudinal member section (6); and **in that** the section running towards the rear end of the longitudinal members (2) is narrower than the bulged front section thereof.

2. The vehicle support structure as claimed in claim 1 or 2, **characterised in that** the longitudinal members (2) are interconnected either directly or indirectly at their frontal end-faces (3), said longitudinal members (2) being preferably joined together with their frontal end faces (3) by way of a butt joint.

3. The vehicle support structure as claimed in claim 1, **characterised in that** the longitudinal members (2) are arranged in a common plain over their entire lengths.

4. The vehicle support structure as claimed in claim 1, **characterised in that** the two longitudinal members (2) are curved with respect to each other in a mirror-symmetrical way.

5. The vehicle support structure as claimed in claim 1, **characterised in that** the longitudinal members (2) extend over a length of a passenger compartment or interior cabin.

6. The vehicle support structure as claimed in claim 1, **characterised in that** each longitudinal member (2) has a height corresponding to a multiple of its width, the longitudinal members (2) being preferably realised in the form of hollow chamber profiles for accommodating data lines or supply lines therein.

7. The vehicle support structure as claimed in at least one of the preceding claims, **characterised in that** at the front on the longitudinal members (2) a built-on unit (10) comprising a front axle hub is arranged, in particular in a removable manner.

8. The vehicle support structure as claimed in at least one of the preceding claims, **characterised in that** at the rear on the longitudinal members (2) a rear-end structure (11) comprising a rear axle hub is arranged, in particular in a removable manner.

9. The vehicle support structure as claimed in at least one of the preceding claims, **characterised in that** the longitudinal members (2) are interconnected by a plurality of cross members (7 to 9) the height of which corresponds to the height of the longitudinal members (2).

10. The vehicle support structure as claimed in at least one of the preceding claims, **characterised in that** a plurality of support arrangements defining a passenger compartment are detachably or non-detachably connected with the longitudinal members (2).

11. The vehicle support structure as claimed in at least one of the preceding claims, **characterised in that**, laterally spaced from the longitudinal members (2) and with a deformation unit (23) interposed on either side, lateral support column portions (22) are connected from the outside, in particular in a detachable manner, to the longitudinal members (2).

12. The vehicle support structure as claimed in at least one of the preceding claims, **characterised in that** the longitudinal members (2), the at least one cross member (7 to 9) and/or the support arrangements (17 to 29) are made of a light metal alloy and/or of carbon-fibre composite materials and/or of steel.

13. The vehicle support structure as claimed in at least one of the preceding claims, **characterised in that** a base plate (12), which is stable in shape, is joined to a bottom surface of the longitudinal members (2), in particular in a detachable and load-bearing manner, said base plate (12) protruding preferably laterally outward there from, thus forming steps in the reduced-width portions of the longitudinal members (2).

14. A wheeled motor vehicle having a vehicle support structure as claimed in at least one of the preceding claims, **characterised in that** the longitudinal members (2) are disposed at a height at which the action of side impact loads caused by other vehicles is to be expected, in particular at a height of 450 mm above a surface being driven on.

15. The wheeled motor vehicle as claimed in the preamble of claim 14 or as claimed in claim 14, **characterised in that** between adjacent cross members (7 to 9) storage compartments for accommodating underfloor components such as, in particular, power transmission components, drive components, or energy supply components are formed which are closed towards the bottom by base plate (12).

16. The wheeled motor vehicle as claimed in the preamble of claim 14 or as claimed in claim 14 or 15, **characterised in that** the front seats are positioned in such a manner relative to the longitudinal members (2) that they are disposed at the height of longitudinal member sections (5) which form transition zones between the greater spaced portions and the smaller spaced portions of the longitudinal members (2).

## Revendications

1. Structure porteuse de véhicule pour une voiture particulière ou des véhicules utilitaires avec deux longerons qui s'étendent essentiellement dans le sens de la longueur du véhicule, ainsi qu'avec au moins une traverse reliant les longerons entre eux lesquels, situés dans un plan commun, convergent dans une zone frontale vers le centre de la structure porteuse, **caractérisée en ce que**, au-delà d'une largeur maximum, la courbure du longeron (2) de chaque zone de courbure avant (4) revient, dans son extension vers l'arrière, légèrement vers l'intérieur, ce qui donne, dans la vue de dessus, des zones de longeron bombées; **en ce que**, dans cette zone revenant vers l'intérieur par rapport à la largeur maximum, les longerons se poursuivent, au moyen d'une courbure (5) correspondante dans le sens opposé, par une zone de longeron (6) s'étendant vers l'arrière; et **en ce que** la zone s'étendant vers l'extrémité arrière des longerons (2) est plus étroite que la zone bombée avant.

2. Structure porteuse de véhicule selon la revendication 1 ou 2, **caractérisée en ce que** les longerons (2) sont reliés de manière directe ou indirecte au niveau de leurs faces terminales (3) situées à l'avant, les faces terminales (3) des longerons (2) situées à l'avant étant de préférence assemblées de manière à former un joint d'about.

3. Structure porteuse de véhicule selon la revendication 1, **caractérisée en ce que** les longerons (2) sont disposés dans un plan commun sur l'ensemble de leur longueur.

4. Structure porteuse de véhicule selon la revendication 1, **caractérisée en ce que** les deux longerons (2) sont courbés l'un par rapport à l'autre selon une symétrie spéculaire.

5. Structure porteuse de véhicule selon la revendication 1, **caractérisée en ce que** les longerons (2) s'étendent sur une longueur d'un habitacle ou espace intérieur.

6. Structure porteuse de véhicule selon la revendication 1, **caractérisée en ce que** chaque longeron (2) présente une hauteur qui correspond à un multiple, de sa largeur, les longerons (2) étant réalisés de préférence sous forme de profils à chambres creuses destinés à recevoir des lignes de transmission de données ou des lignes d'alimentation.

7. Structure porteuse de véhicule selon au moins une des revendications précédentes, **caractérisée en ce que**, à l'avant, un avant-corps (10) qui comprend un logement d'essieu avant est disposé notamment de manière amovible sur les longerons (2).

8. Structure porteuse de véhicule selon au moins une des revendications précédentes, **caractérisée en ce que**, à l'arrière, une structure arrière (11) qui comprend un logement d'essieu arrière est fixée notamment de manière amovible sur les longerons (2).

9. Structure porteuse de véhicule selon au moins une des revendications précédentes, **caractérisée en ce que** les longerons (2) sont reliés entre eux par plusieurs traverses (7 à 9) dont la hauteur correspond à la hauteur des longerons (2).

10. Structure porteuse de véhicule selon au moins une des revendications précédentes, **caractérisée en ce que** plusieurs agencements de support définissant un habitacle sont reliés de manière amovible ou inamovible aux longerons (2).

11. Structure porteuse de véhicule selon au moins une des revendications précédentes, **caractérisée en ce que** des parties de montants latéraux (22) sont reliées de l'extérieur notamment de manière amovible aux longerons (2), et ce à une distance latérale donnée desdits longerons (2) en intercalant respectivement une unité de déformation (23).

12. Structure porteuse de véhicule selon au moins une des revendications précédentes, **caractérisée en ce que** les longerons (2), ladite au moins une traverse (7 à 9) et/ou les agencements de support (17 à 29) sont réalisés en un alliage léger et/ou en matériaux composites de fibres de carbone et/ou en acier.

13. Structure porteuse de véhicule selon au moins une des revendications précédentes, **caractérisée en ce qu'**une plaque de fond (12) indéformable est placée notamment de manière amovible et portante sur une face inférieure des longerons (2), la plaque de fond (12) dépassant de préférence latéralement de celle-ci vers l'extérieur pour former des marches dans les parties des longerons (2) de plus faible largeur.

14. Véhicule automobile à roues avec une structure porteuse de véhicule selon au moins une des revendications précédentes, **caractérisé en ce que** les longerons (2) sont disposés à hauteur de l'action de charges engendrées par un impact latéral avec d'autres véhicules, notamment à une hauteur de 450 mm au-dessus du sol.

15. Véhicule automobile à roues selon le préambule de la revendication 14 ou selon la revendication 14, **caractérisé en ce que** des espaces destinés à loger des modules disposés sous le plancher, tels que notamment des modules de transmission de force, d'entraînement ou d'alimentation en énergie, lesquels sont fermés vers le bas par la plaque de fond (12), sont formés entre des traverses (7 à 9) voisines.

16. Véhicule automobile à roues selon le préambule de la revendication 14 ou selon la revendication 14 ou 15, **caractérisé en ce que** des sièges avant sont positionnés par rapport aux longerons (2) de manière à être disposés à hauteur de zones de longeron (5) qui forment des zones de transition entre des parties plus espacées et des parties moins espacées des longerons (2).
